# EUROPEAN PATENT APPLICATION

(11) **EP 4 810 280 A1**
(43) Date of publication of application: **23.09.2026**
(21) Application number: 24915203.4
(22) Date of filing: 27.12.2024
(51) Int. Cl.: B60H 1/00, F24F 13/10, F24F 13/28, F24F 13/00

(54) **VEHICLE-MOUNTED HEATING, VENTILATION, AND AIR CONDITIONING ASSEMBLY AND VEHICLE**

(30) Priority: 02.01.2024 CN 202420005359 U
(71) Applicant: Chongqing Changan Automobile Co., Ltd., Chongqing 400023 (CN)
(72) Inventor: KUANG, Yunfeng, Chongqing 400023 (CN); LUAN, Aidong, Chongqing 400023 (CN); WANG, Chengjie, Chongqing 400023 (CN); LI, Ming, Chongqing 400023 (CN); LI, Jingyuan, Chongqing 400023 (CN)
(74) Representative: Groth & Co. KB
(86) International application number: PCT/CN2024/143379
(87) International publication number: WO 2025/145989

(57) **Abstract**

A vehicle-mounted heating, ventilation, and air conditioning assembly and a vehicle. The vehicle-mounted heating, ventilation, and air conditioning assembly includes an air conditioner main body (10) and an optimization component disposed in the air conditioner main body (10). The optimization component is configured to optimize internal layout space of the air conditioner main body (10). The optimization component includes an air conditioning filter element (120). The air conditioning filter element (120) is detachably mounted in the air conditioner main body (10). The air conditioning filter element (120) has a multi-segment structure. The optimization component further includes a sliding air damper (111). The sliding air damper (111) is slidably connected to the air conditioner main body (10). The size of the air conditioner main body (10) is reduced by arranging the optimization component, so that there is no need to occupy space beneath an instrument panel in a driving area. The present application allows for installation on left-hand drive and right-hand drive configurations and is compatible with layout and operation of the left-hand drive and right-hand drive configurations.

## Description

### CROSS-REFERENCE TO RELATED APPLICATIONS

This application claims priority to Chinese Patent Application No. 202420005359.7, entitled "VEHICLE-MOUNTED HEATING, VENTILATION, AND AIR CONDITIONING ASSEMBLY AND VEHICLE" filed with the China National Intellectual Property Administration on January 2, 2024, which is incorporated by reference in its entirety.

### TECHNICAL FIELD

The present application relates to the field of vehicle-mounted air conditioning technologies, and specifically to a vehicle-mounted heating, ventilation, and air conditioning assembly and a vehicle.

### BACKGROUND ART

A heating, ventilation, and air conditioning system plays a critical role in heating and cooling in vehicles. It consists of multiple components such as an evaporator, a heater core, and a blower assembly, and is responsible for regulating airflow and air conditioning modes. Therefore, the heating, ventilation, and air conditioning system is considered a key component in a vehicle.

Existing heating, ventilation, and air conditioning systems are structurally classified mainly into offset and center-mounted types, each with its own advantages and disadvantages in layout. In the offset type, a blower is positioned on the left or right side of an evaporator. A distribution box in the offset type has a small height dimension, but due to the presence of an air intake box, it occupies space beneath an instrument panel in a front passenger area. In the center-mounted type, a blower and an evaporator are arranged in the same area, with an air intake located on a left or right side of a heating, ventilation, and air conditioning unit. A conventional center-mounted type requires layout of structures such as filter elements and air dampers, resulting in a large air intake dimension, which also occupies significant space beneath an instrument panel in a front passenger area.

However, with the vigorous development of the automotive industry, many vehicle models are developed for the global market and must accommodate both left-hand drive and right-hand drive configurations. If the design of a heating, ventilation, and air conditioning system is not compatible with both left-hand drive and right-hand drive configurations, during development of export models, due to the changed position of the steering mechanism, the heating, ventilation, and air conditioning system would require a mirrored design and development. This would entail redesign and retooling of the heating, ventilation, and air conditioning system, as well as redevelopment of the corresponding front wall panel and steering support. As a result, the development costs of the overall vehicle could increase by tens of millions of yuan, resulting in significant waste.

Therefore, for vehicle models developed for the global market, there is an urgent need to develop a new heating, ventilation, and air conditioning system that is compatible with both left-hand drive and right-hand drive configurations to meet the demands of different regional markets.

### SUMMARY

An objective of the present application is to provide a vehicle-mounted heating, ventilation, and air conditioning assembly and vehicle, to resolve the problem in the prior art that an air intake in a center-mounted type heating, ventilation, and air conditioning system has a large dimension and occupies large space beneath an instrument panel in a driving area.

To achieve the foregoing objective, the technical solutions adopted in the present application are as follows:
A vehicle-mounted heating, ventilation, and air conditioning assembly is provided, including an air conditioner main body and an optimization component disposed in the air conditioner main body, where the optimization component is configured to optimize internal layout space of the air conditioner main body.

Based on the foregoing measures, the size of the air conditioner main body is reduced by arranging the optimization component, so that there is no need to occupy space beneath an instrument panel in a driving area. The present application allows for installation on left-hand drive and right-hand drive configurations and is compatible with layout and operation of the left-hand drive and right-hand drive configurations.

Optionally, the optimization component includes an air conditioning filter element, the air conditioning filter element is detachably mounted in the air conditioner main body, and the air conditioning filter element has a multi-segment structure.

Based on the foregoing technical measures, the air conditioning filter element is disposed as the multi-segment structure, so that the space in the air conditioner main body can be fully utilized, thereby reducing space required in an installation process or replacement process of the air conditioning filter element.

Optionally, the optimization component further includes a sliding air damper, and the sliding air damper is slidably connected to the air conditioner main body.

Based on the foregoing technical measures, the air damper is disposed as a sliding opening and closing structure, so that while the function of the air conditioner main body is ensured, the phenomenon that a conventional rotating air damper occupies a large dimension due to its rotation radius is mitigated, thereby reducing the overall dimension of the air conditioner main body.

Optionally, a first heater core and a second heater core are further disposed in the air conditioner main body, and the first heater core and the second heater core are arranged side by side.

Based on the foregoing technical measures, the air conditioning assembly uses a three-core design mechanism, in which an evaporator assembly, a built-in condenser, and an air-heating electric heater assembly or an evaporator assembly, a heater core, and an air-heating electric heater assembly may be assembled, thereby achieving compatibility with conventional air conditioning systems and various types of heat pump systems.

Optionally, the vehicle-mounted heating, ventilation, and air conditioning assembly further includes an inside/outside air circulation duct and a blower assembly, where the inside/outside air circulation duct and the blower assembly are both disposed on the air conditioner main body, one end of the inside/outside air circulation duct is in communication with the blower assembly, and a filter screen is disposed at the other end of the inside/outside air circulation duct.

Based on the foregoing technical measures, in the present application, the filter screen is disposed at an air outlet of the inside/outside air circulation duct, so that large foreign objects can be prevented from entering the air duct in an air intake process, thereby avoiding damage to the air conditioning assembly.

Optionally, the vehicle-mounted heating, ventilation, and air conditioning assembly further includes a drain channel, where the drain channel is detachably connected to the air conditioner main body.

Based on the foregoing technical measures, the drain channel uses a detachable structural design, so that the drain channel can be changed based on subsequent requirements without changing the original design of the air conditioning assembly.

A vehicle is provided. The vehicle includes a vehicle main body and the vehicle-mounted heating, ventilation, and air conditioning assembly described above.

The beneficial effects of the present application are as follows:
1. In the present application, the air conditioning filter element is disposed as the multi-segment structure, so that the space in the air conditioner main body can be fully utilized, thereby reducing space required in an installation process or replacement process of the air conditioning filter element. In addition, the air damper is disposed as a sliding opening and closing structure, so that while the function of the air conditioner main body is ensured, the overall dimension of the air conditioner main body is reduced. There is no need to occupy space beneath an instrument panel in a driving area. The present application allows for installation on left-hand drive and right-hand drive configurations and is compatible with layout and operation of the left-hand drive and right-hand drive configurations.
2. In the present application, the air conditioning assembly uses a three-core design mechanism, in which an evaporator assembly, a built-in condenser, and an air-heating electric heater assembly or an evaporator assembly, a heater core, and an air-heating electric heater assembly may be assembled, thereby achieving compatibility with conventional air conditioning systems and various types of heat pump systems.

### BRIEF DESCRIPTION OF THE DRAWINGS

FIG. 1 is a schematic structural diagram of a vehicle-mounted heating, ventilation, and air conditioning assembly from a first perspective according to the present application;
FIG. 2 is a schematic structural diagram of a vehicle-mounted heating, ventilation, and air conditioning assembly from a second perspective according to the present application;
FIG. 3 is a schematic structural diagram of a vehicle-mounted heating, ventilation, and air conditioning assembly from a third perspective according to the present application;
FIG. 4 is a front view of a vehicle-mounted heating, ventilation, and air conditioning assembly according to the present application;
FIG. 5 is a top view of a vehicle-mounted heating, ventilation, and air conditioning assembly according to the present application;
FIG. 6 is a side view of a vehicle-mounted heating, ventilation, and air conditioning assembly according to the present application;
FIG. 7 is a front view of a vehicle-mounted heating, ventilation, and air conditioning assembly according to the present application; and
FIG. 8 is a cross-sectional view of a vehicle-mounted heating, ventilation, and air conditioning assembly according to the present application.

Where:
100. vehicle-mounted heating, ventilation, and air conditioning assembly; 10. air conditioner main body; 1001. coolant expansion valve interface; 1002. heating, ventilation, and air conditioning water pipe interface; 1003. upper left mounting point; 1004. upper right mounting point; 1005. lower left mounting point; 1006. lower right mounting point; 1007. left-side mounting point; 1008. right-side mounting point; 103. filter screen; 104. front blow air outlet; 105. defrost air outlet; 106. rear blow air outlet; 107. middle-row left blow air outlet; 108. middle-row right blow air outlet;
110. blower assembly; 111. sliding air damper; 112. rear blow air damper; 113. front blow air damper; 114. defrost air damper;
120. air conditioning filter element; 1201. filter element lower segment; 1202. filter element upper segment; 121. mode actuator; 122. right-side temperature actuator; 123. left-side temperature actuator; 124. inside/outside circulation actuator;
130. evaporator assembly; 140. first heater core; 150. second heater core; 160. drain pipe; 170. inside/outside air circulation duct; 180. drain channel; 190. cover plate.

### DETAILED DESCRIPTION

The implementations of the present application are described below with reference to the accompanying drawings and optional embodiments, and those skilled in the art can easily understand other advantages and efficacy of the present application through the content disclosed in this specification. The present application may also be implemented or applied through other different specific implementations, and various modifications or changes may also be made to various details in this specification based on different views and applications without departing from the spirit of the present application. It should be understood that the optional embodiments are for the purpose of describing the present application only, and are not intended to limit the scope of protection of the present application.

It should be noted that the drawings provided in the following embodiments schematically describe the basic concept of the present application, and therefore only the components related to the present application are shown in the drawings, which are not drawn in accordance with the number, shape, and dimension of the components in actual implementation. In actual implementation, the components, number, and proportion of the components may be changed arbitrarily, and the layout of the components may be more complex.

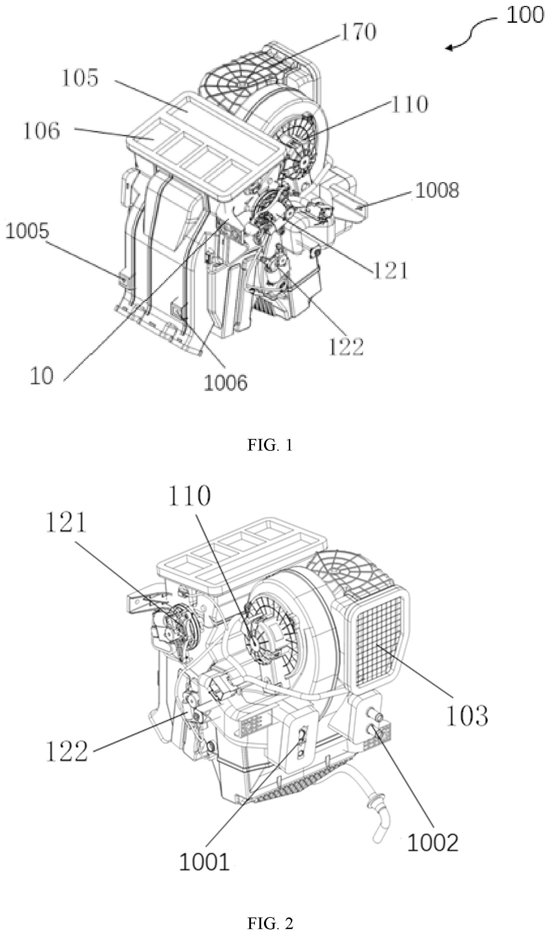

As shown in FIG. 1 to FIG. 8, the present application provides a vehicle-mounted heating, ventilation, and air conditioning assembly. The vehicle-mounted heating, ventilation, and air conditioning assembly 100 includes an air conditioner main body 10 and an optimization component disposed in the air conditioner main body 10. The optimization component is configured to optimize internal layout space of the air conditioner main body 10.

The optimization component includes an air conditioning filter element 120 and a sliding air damper 111. The air conditioning filter element 120 is disposed as a multi-segment structure. Optionally, the air conditioning filter element 120 includes a filter element upper segment 1202 and a filter element lower segment 1201. Certainly, during actual application, the air conditioning filter element 120 may be disposed as three or more segments. In this way, space required for mounting the air conditioning filter element 120 can be reduced, which can be conducive to reducing the overall dimension of the air conditioner main body.

Compared with a rotating defrost air damper 114 (see below), the sliding air damper 111 disposed in the present application can reduce internal space required for the process of opening and closing the air damper, thereby assisting the air conditioning filter element 120 in reducing the dimension of the air conditioner main body 10. There is no need to occupy space beneath an instrument panel in a driving area. The present application allows for installation on left-hand drive and right-hand drive configurations and is compatible with layout and operation of the left-hand drive and right-hand drive configurations. The sliding air damper 111 may slide based on control requirements to regulate an opening degree ratio, thereby achieving different mixing ratios of hot and cold air.

FIG. 1, FIG. 2, FIG. 3, and FIG. 4 are schematic diagrams of the vehicle-mounted heating, ventilation, and air conditioning assembly 100. The vehicle-mounted heating, ventilation, and air conditioning assembly 100 is highly integrated. A blower assembly 110 is arranged adjacent to an inside/outside air circulation duct 170. One end of the inside/outside air circulation duct 170 is in communication with the blower assembly 110, and a filter screen 103 is disposed at the other end of the inside/outside air circulation duct 170. The filter screen 103 is configured to prevent large foreign objects outside the vehicle from entering the air duct. The vehicle-mounted heating, ventilation, and air conditioning assembly 100 is provided with one mode actuator 121, one right-side temperature actuator 122, one left-side temperature actuator 123, and one inside/outside circulation actuator 124. The foregoing actuators are all disposed on the air conditioner main body 10. A drain pipe 160 is disposed at a bottom of the air conditioner main body 10.

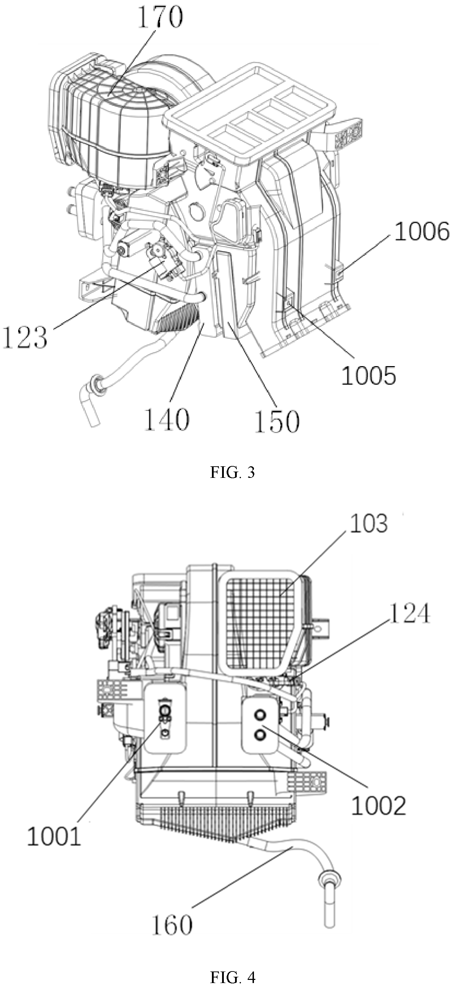

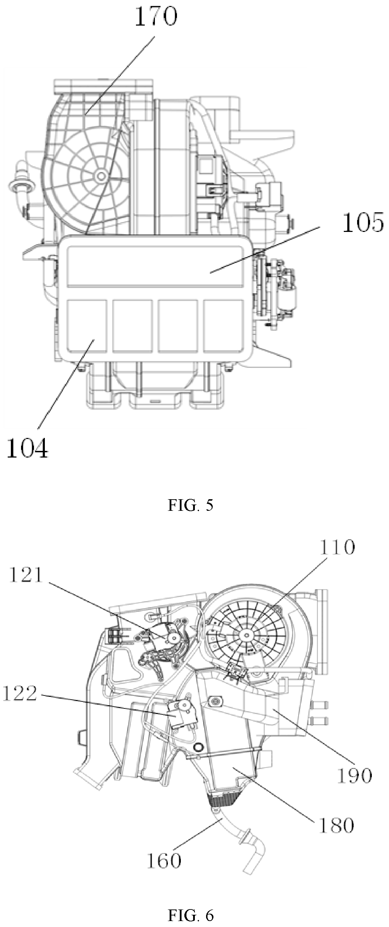

As shown in FIG. 4 and FIG. 5, the inside/outside air circulation duct 170 is disposed on a side of the air conditioner main body 10. The inside/outside air circulation duct 170 has a small dimension, and does not exceed a boundary defined by three side surfaces of the air conditioner main body 10 as a whole. A coolant expansion valve interface 1001 and a heating, ventilation, and air conditioning water pipe interface 1002 are further disposed on the air conditioner main body 10. The coolant expansion valve interface 1001 and the heating, ventilation, and air conditioning water pipe interface 1002 are symmetrically disposed on a side surface of the air conditioner main body 10 along the blower assembly 110.

With reference to FIG. 6, a drain channel 180 is disposed at the bottom of the air conditioner main body 10. The drain channel 180 is detachably connected to the air conditioner main body 10. In this way, the drain channel 180 may be changed based on subsequent requirements without changing the design of the body of the vehicle-mounted heating, ventilation, and air conditioning assembly 100. A surface of a connection pipe of a coolant expansion valve is covered with a cover plate 190.

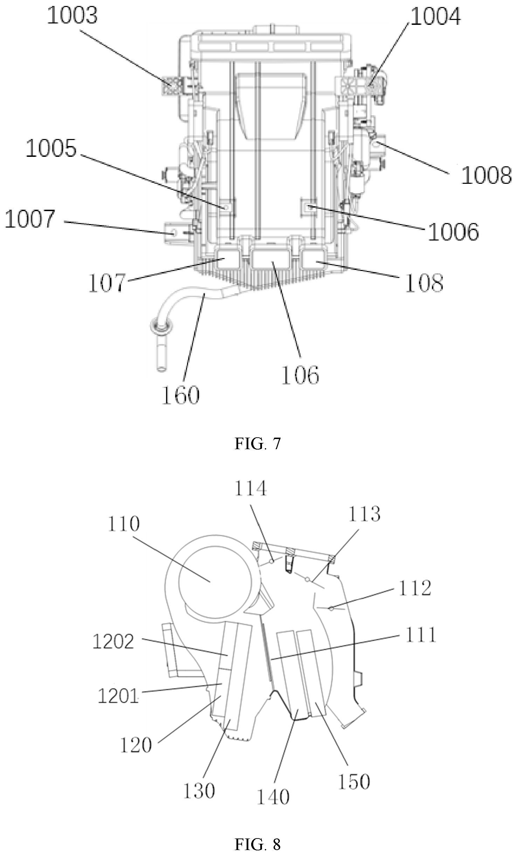

With reference to FIG. 5 and FIG. 7, a front blow air outlet 104, a defrost air outlet 105, a rear blow air outlet 106, a middle-row left blow air outlet 107, and a middle-row right blow air outlet 108 are formed in the air conditioner main body 10. The foregoing air outlets are separately configured to provide cold air or warm air to different parts of the vehicle. Related content is relatively mature prior art. Details are not excessively described herein.

Six mounting points, namely, an upper left mounting point 1003, an upper right mounting point 1004, a lower left mounting point 1005, a lower right mounting point 1006, a left-side mounting point 1007, and a right-side mounting point 1008, are disposed on the vehicle-mounted heating, ventilation, and air conditioning assembly 100. The upper left mounting point 1003, the upper right mounting point 1004, the lower left mounting point 1005, and the lower right mounting point 1006 are connected to a steering support, and the left-side mounting point 1007 and the right-side mounting point 1008 are connected to a front wall panel.

As shown in FIG. 8, an evaporator assembly 130, a first heater core 140, and a second heater core 150 are further disposed in the air conditioner main body 10. The vehicle-mounted heating, ventilation, and air conditioning assembly 100 uses a three-core design. The air conditioning filter element 120 is disposed at a front portion of the evaporator assembly 130. The first heater core 140 is arranged adjacent to the second heater core 150. A heater core or a built-in condenser may be selected as the first heater core 140 based on system architecture requirements. An air-heating electric heater or a heater core may be selected as the second heater core 150 based on system architecture requirements.

A defrost air damper 114, a front blow air damper 113, and a rear blow air damper 112 are further disposed on the air duct in the air conditioner main body 10. The defrost air damper 114, the front blow air damper 113, and the rear blow air damper 112 are all rotatably connected to the air conditioner main body 10. The flow directions of hot and cold air are guided by controlling different air dampers to open and close.

The present application further provides a vehicle. The vehicle includes a vehicle main body and a vehicle-mounted heating, ventilation, and air conditioning assembly 100 disposed on the vehicle main body.

The above embodiments are merely preferred embodiments provided to fully illustrate the present application, and the scope of protection of the present application is not limited thereto. Any equivalent substitution or modification made by those skilled in the art based on the present application shall fall within the scope of protection of the present application.

## Claims

1. A vehicle-mounted heating, ventilation, and air conditioning assembly, comprising an air conditioner main body (10) and an optimization component disposed in the air conditioner main body (10), wherein the optimization component is configured to optimize internal layout space of the air conditioner main body (10).

2. The vehicle-mounted heating, ventilation, and air conditioning assembly according to claim 1, wherein the optimization component comprises an air conditioning filter element (120), the air conditioning filter element (120) is detachably mounted in the air conditioner main body (10), and the air conditioning filter element (120) has a multi-segment structure.

3. The vehicle-mounted heating, ventilation, and air conditioning assembly according to claim 1, wherein the optimization component further comprises a sliding air damper (111), and the sliding air damper (111) is slidably connected to the air conditioner main body (10).

4. The vehicle-mounted heating, ventilation, and air conditioning assembly according to claim 1, wherein a first heater core (140) and a second heater core (150) are further disposed in the air conditioner main body (10), and the first heater core (140) and the second heater core (150) are arranged side by side.

5. The vehicle-mounted heating, ventilation, and air conditioning assembly according to claim 1, further comprising an inside/outside air circulation duct (170) and a blower assembly (110), wherein the inside/outside air circulation duct (170) and the blower assembly (110) are both disposed on the air conditioner main body (10), one end of the inside/outside air circulation duct (170) is in communication with the blower assembly (110), and a filter screen (103) is disposed at the other end of the inside/outside air circulation duct (170).

6. The vehicle-mounted heating, ventilation, and air conditioning assembly according to claim 1, further comprising a drain channel (180), wherein the drain channel (180) is detachably connected to the air conditioner main body (10).

7. A vehicle, wherein the vehicle comprises a vehicle main body and the vehicle-mounted heating, ventilation, and air conditioning assembly of any one of claims 1 to 6.
